# EUROPEAN PATENT APPLICATION

(11) **EP 2 913 785 A1**
(43) Date of publication of application: **02.09.2015**
(21) Application number: 14156901.2
(22) Date of filing: 27.02.2014
(51) Int. Cl.: G06Q 10/02, H04W 4/02

(54) **Virtual queue management system**

(71) Applicant: Oloeriu, Bogdan-Marian, Iasi (RO)
(72) Inventor: Oloeriu, Bogdan-Marian, Iasi (RO)
(74) Representative: Boncea, Oana-Laura

(57) **Abstract**

A system and method for managing a virtual queue in which a user can get the registering information for a virtual queue, said information being for example in the form of a http or https web address, and by accessing said information he can sign up into a virtual queue or view a queue's status from anywhere and anytime he wants.

## Description

This invention relates in general to managing situations where people would form physical queues and more specifically to a virtual queue system in which a member of the queue may easily sign up as a virtual user using an internet connectable device.

Oftentimes, people are trying to engage in specific activities at the exact same time, for example to use services provided by a service provider or to purchase goods from a supplier of goods. For the cases where the specific activity can only be performed by one person at a time, people have to form queues. The current art provides some methods to allow a queue user to retain his order in the queue without the need to physically stand in line, but in the proximity of the queue.

Queue management systems that exist may be in the form of sequence number ticket systems, in which the person needs to take an order number and then he needs to stand in the proximity of the queue, where the information about the current order number is displayed. Should the person not be present when it's his turn, he loses his order and has to start over again.

Some other queue management systems from the prior art are in the form of virtual queue systems, relaying on the users' phone numbers. They send short text messages to the clients when their turn comes. These systems require significant amount of logistic resources to set up and also to activate. Also these systems still keep the users in the proximity of the space where the current active number is displayed. This is because when they receive the text message they need to arrive very quickly to the shop assistant or consultant and they lack a way of accessing the queue status from somewhere else.

Other queue monitoring systems manage virtual queues relaying on users' smart phones. In this case, the user of the system has to install a specific application before signing up to the queue. For example, US8068600 discloses a queue management system comprising a customer management terminal with an input device and queue management software. Any person may sign in by using the input device and by entering the customer information such as name, address and contact information. When the customer has achieved a top priority or first in line position, the queue management software contacts the customer, which has a predetermined time to arrive to accept the service. In this case, the customer has no information about the waiting time, such that he needs to stay in the proximity of the place where the service is provided in order to meet the predetermined time after he is contacted. Also, just like in the previous case, this system requires investment of considerable amount of logistic resources.

Thus, there is a need in the art for an efficient monitoring system of the status of a queue in which a virtual queue is created without investment in specific resources and may be monitored from anywhere.

Method and computer system are described for creating a virtual queue and allowing the signing up into the queue and checking the queue status from anywhere. Preferably, there is provided also the possibility of swapping queue numbers between queue members and exiting the queue. A transaction record is maintained for the queue that includes data about the queue members, status of the queue and also about the queue managers.

The invention also tries to avoid using specialized software or hardware equipment.

It is an object of the invention to provide a system for creating a virtual queue and for accessing said queue from distance by at least one user, comprising
a. computer executable instructions comprising
   i. **a security module (10)** for validating the requests from the queue users or managers, by changing the validation state of the request from not defined into legal or illegal state,
   ii. **an event registration module (20)** for processing said requests and sending them to the queue (30) and notification module (40) to be further processed,
   iii. **a queue module (30)** for establishing and updating at least one virtual queue (301) and providing information (302) for registering into said queue via a network or internet connection (303), and for updating the queue status information (31) and
   iv. **a notification module (40)** for sending notifications
b. means (50) for running said computer executable instructions and capable of having a network or internet connection
c. communicating means (60) for communicating to at least one user said information (302) for registering into a queue

Preferably, the system also comprises at least one device (70) for inputting the queue registration information (302) into a web browser and, based on said information (302), for accessing the virtual queue (301) via a network or internet connection (303). After accessing said virtual queue (301) a user may view the virtual queue's status information (31) and/or may sign up into the virtual queue (301).

It is another object of the invention to provide a method for accessing a virtual queue from distance by at least one user, comprising the steps of:
a. establishing at least one virtual queue (301) and providing information (302) for registering into said queue via a network or internet connection (303)
b. communicating to at least one user said information (302) for registering into the queue (301)
c. inputting said queue registration information (302) into a device(70) and based on said information (302) accessing the virtual queue (301) via a network or internet connection (303)
d. view the virtual queue's status information (31), for example the current user number in the virtual queue, the user number in the queue and/or the number that may be allocated to a new user and the estimated time of waiting until its turn comes

Alternatively, the method may further comprise step
e. signing up to the virtual queue of a new user and receiving a queue user number

After signing up to the virtual queue, the users may swap the queue user numbers. According to the method of the invention, a queue user may choose to be notified about the queue status by selecting a notifying method, such as email, sms, etc. and, optionally, how long before the estimated time of appointment to be notified.

### BRIEF DESCRIPTION OF THE DRAWINGS

Fig 1 is a high-level block diagram of a system according to the invention.
Fig 2 is a high-level block diagram illustrating the architecture of the cloud application (100) for creating virtual queues and processing data generated by it.
Fig 3 is a high-level block diagram illustrating a basic architecture of a typical computer system for use as means (50) for running computer executable instructions.
Fig 4 is a flow chart illustrating activities from the queue manager point of view.
Fig 5 is a flow chart illustrating activities from the queue member point of view.
Fig 6 shows an exemplary screen shot according to one embodiment of the invention presenting the information (302) for registering into the queue via the communicating means (60)
Fig 7 shows exemplary screen shots of the user device's (70) screen according to one embodiment of the invention after accessing the registration information (302)

### DETAILED DESCRIPTION OF THE INVENTION

In the further detailed description, well-known methods, procedures, components, modules and/or units have not been described in detail so as not to cumber the understanding of the invention. The embodiments and other aspects of this invention will be readily apparent from the detailed description below and the appended drawings, which are meant to illustrate and not to limit the invention.

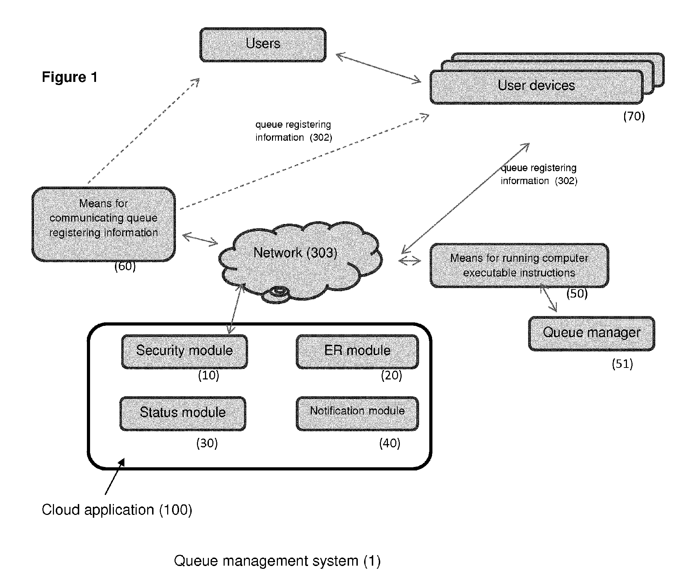

Embodiments of the invention are directed to a virtual queue management system (fig. 1). By using a virtual queue management system (1) according to the invention, any user may create and/or use a virtual queue. A user who creates the virtual queue is called a **queue manager.** The persons who access the registration information (302) for viewing queue's details and/or for signing up into the queue are called **queue users or queue clients.**

In order to create a virtual queue (301), the queue manager has to access a designated web page and log into the cloud application (100) using, for example, his personal computer. Then he inputs required queue details like, for example, the name of the queue and other parameters like starting number, average time per customer, etc and confirms the new queue.

The system (1) comprises computer executable instructions for creating, managing and accessing a virtual queue in the form of a cloud application (100). Said computer executable instructions may be structured in 4 modules:
i. **a security module (10)** for validating the requests from the queue users or managers, by changing the validation state of the request from not defined into legal or illegal state,
ii. **an event registration module (20)** for processing said requests and sending them to the queue and notification module to be further processed,
iii. **a queue module (30)** for establishing and updating at least one virtual queue (301) and providing information (302) for registering into said queue via a network or internet connection (303), and for updating the queue status information (31) and
iv. **a notification module (40)** for sending notifications

Further it is described a way the cloud application (100) works when processing a request from a user. It is to be understood that the modular structure of the cloud application (100) and the functions assigned to each module are illustrative, and the invention is not meant to be restricted to such a structure, but it covers any combination of modules and functions, as long as the functionality of the application (100) as a whole is not changed.

### Security module

Security module is responsible to validate (i.e. to change the validation state of a request from not defined into a legal or illegal state) all the requests that are coming from the outside of the queue system. The security module implements the logic that has as a result the final decision about the future course of action.

In order to make a decision, the security module gets the required data for validation from the queue module.

The security module is also responsible for storing data about users that are registered into the system, preferably validation data like user name, notification type, notification value, etc. After a request is validated, it is passed to the Event Registration module.

### Event registration module

The event registration module is processing the request.

It is transforming the basic request into an event object (it creates an event object). The event will have all the required information that is needed in order to be further processed by the notification and/or queue module.

When it creates the event object, the event registration module gets the required data from the queue module and will append them to said event object.

If the event has as an effect any modification to the queue status, then it is being passed to the queue module and, if desired, to the notification module. In case the event does not change the status of the queue, then it may be passed only to the notification module.

### Queue module

The queue module is the module that is responsible to store in a database all the information about a queue, all the changes that modify somehow the queue status and all the data regarding illegal state requests. All the data about queues' devices, clients and events are maintained into the cloud system by the queue module. The logic about how a queue is designed to work is implemented by the queue module. The queue module is responsible to provide to the other modules the requested information. Also after any change has been implemented, the queue module transfers the processing of the event to the notification module in order to perform the required notifications.

### Notification module

The notification module is the module that performs all the required notifications. This module is the module that prepares and sends emails, device messages, sms, social media messages etc.

In order to properly format the notification messages, the notification module will get the required data from the queue module.

### Example of system behaviour to requests

Further are depicted some examples of system (1) behaviour to a request from a user.

### Example 1

Request type: Request for a new user to become member of the queue with id no 234.

### Validation security state: Legal request

- The request is intercepted by the **security module**
- The security module decodes the following information from the request message
   o Status: New user
   o Notification type: email
   o Notification value: user@email.com
   o Queue id: 234
- The **security module** gets from the **queue module** the validation data for queue 234 and determines that for this particular queue is not allowed for a user to sign up multiple times before his previous number was archived (his number has passed).
- The **security module** gets from the **queue module** a list with the current active queue members for queue 234.
- The **security module** checks the list with the active queue members and determines that there is no client with the same notification signature, i.e.
   o Notification type: email
   o Notification value: user@email.com
- The **security module** changes the validation state of the request from not defined into legal.
- The **security module** passes the request to the **event registration module.**
- The **event registration module** creates an event object and based on the request received from the security module populates the event object with the following information
   o Event validation state: legal
   o Event related to queue id: 234
   o Event type: new queue member
   o User notification type: email
   o User notification value: user@email.com
- The **Event registration module** gets from the **queue module** the list with the devices associated to the queue 234 and appends it to the event object.
- The **Event registration module** passes the event object to the **queue module.**
- The **queue module** saves in the database the information about the new user and also generates the nonexistent information and appends it to the event object
   o User id: (new random id) = 345
   o Number id: (new random id) = 456
   o Number value: (next available number in the queue) B7
   o User management panel id: (new random long id) = 2e50239f-8bbb-462d-8a2a-8ea76c3243c0
- The **queue module** passes the event object to the **notification module**
- The **notification module** replies back directly to the original request with a formatted html success page asking the user to check his email for more details about the queue status
- The **notification module** sends a confirmation message to the user@email.com informing him that
   o He has successfully signed up into the queue
   o His number is B7
   o His management url is this (clear form: http://www.mysmartline.eu/UserPannel/show/2e50239f-8bbb-462d-8a2a-8ea76c3243c0)
- The notification module sends also a notification message to all the devices associated with the queue 234 that there is a new queue member.
- End of request process

### Example 2

Request type: Request for a user to become member of the queue.

Security state: Illegal request because the user is already an active member of the queue.
- The request is intercepted by the **security module**
- The **security module** decodes the following information from the request message
   o status: New user
   o Notification type: email
   o Notification value: user@email.com
   o Queue id: 234
- The **security module** gets from the **queue module** the validation data for queue 234 and determines that for this particular queue is not allowed for a user to sign up multiple times before his previous number is not archived.
- The **security module** gets from the **queue module** a list with the current active queue members for queue 234
- The **security module** checks the list with the active queue members and determines that there is already a user with the same notification signature.
   o Notification type: email
   o Notification value: user@email.com
- The security module changes the state of the request form not defined into illegal
- The security module passes the request to the Event registration module
- The Event registration module creates an event and based on the request received from the security module populates the event with as much information possible about who generated the event
   o Event validation state: illegal
   ○ Event related to queue id: 234
   o Event type: new queue member
   o User notification type: email
   o User notification value: user@email.com
   o Information decoded from the request header:
      ■ Browser: Firefox
      ■ Device: (mobile / workstation)
      ■ User MAC address (Media Access Control address is unique in the world per network interface)
      ■ User private ipv4: private ip
      ■ User public ipv4: public ip
      ■ User private ipv6: private ip
      ■ User public ipv6: public ip
      ■ Country
      ■ Region
      ■ GPS coordinates
      ■ Etc
- The Event registration module passes the event to the queue module
- The queue module logs the illegal requests and, based on the system settings, saves in the database all the computed details about the illegal request.
- The queue module passes the event to the notification module
- The notification module replies back directly to the original request with an illegal request formatted message
- End of request process

Using a queue management system (1) according to present invention, when a virtual queue is created, the queue module (30) provides to the queue manager the registering information (302) necessary for a queue user to view the queue's status and/or sign up to the queue in the form of a http (https) web address. Depending on the desired configuration, the http resource can automatically change after every access or only when requested by the queue manager. The first option provides better protection against various forms of electronic attacks but it makes the process of managing the queue more difficult.

The queue manager publishes said queue registration information (302) using communicating means (60). Different ways of communicating said information may be used, for example some of the communication means (60) are listed below:
**1. an electronic display.** This is the preferred way because the information may be easily updated and it is the most secured way. The device can transmit to the future queue users the registration information in, for example, any of the following ways.
   a. QR code. The registration information (302) can be decoded in a Quick Response Code. This method allows to the future queue users to get desired information (302) by scanning the QR code.
   b. NFC. Near field communication. The registration information (302) can be encoded in to a short text message that is transmissible using the NFC compatible devices. This method allows the future queue users to get the queue registration information (302) using their NFC compatible device.
   c. Short URL. In this way the future queue users have to manually type the short URL into their device's web browser.
   d. Standard URL. In this way the future queue users have to manually type the URL into their device's web browser.
2. **a printed note.** A printed note can be generated by the queue manager and then posted in the proximity where the queue services are provided. The printed note can transmit to the future queue members the registration information (302) in any of the following ways.
   a. QR code
   b. Short URL.
   c. Standard URL
3. **a hand written note.** Using the registration information (302) a hand written note can be written by hand by the queue manager and then posted in the proximity where the queue services are provided. The hand written note can transmit to the future queue members the registration information in any of the following ways.
   a. Short URL.
   b. Standard URL.

When a person is interested in purchasing the products or services provided by the queue manager, he should sign up to the corresponding virtual queue, by performing the flowing activities.
1. Get from the communication means (60) the queue registration information (302)
2. Access the queue registration resources, via the queue registration information (302), using the personal user device (70), for example a smart phone, a tablet or a laptop.
3. Select the desired notification option, i.e. the desired way to be notified about the updated queue status (for example sms, email, phone call, etc), and provide necessary personal details (for example phone number for sms or phone call, email address for email, etc)
4. Optionally input other personal details, required by the queue manager
5. Confirm signing up to the queue
6. Optionally use personal device (70) to view information about queue status from time to time in order to evaluate the remaining waiting time.

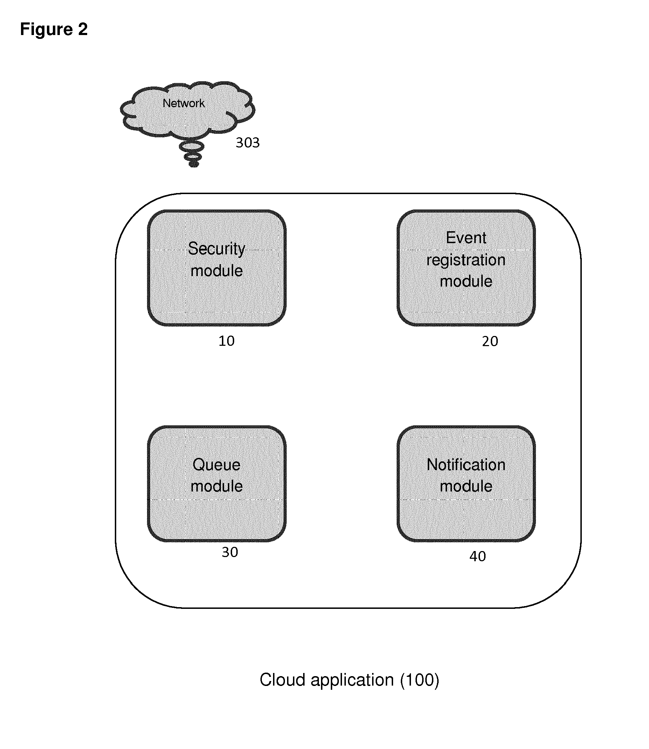

According to one embodiment of the invention, the computer executable instructions that allow creating a virtual queue and processing queue's details are in the form of a cloud application (100) accessible via a network or internet connection through the application's interfaces (manager interface and user interface). Said computer executable instructions are divided in 4 modules (see Figure 2), as mentioned above. When a manager creates a virtual queue, the queue module (30) is responsible for creating the virtual queue. Creating the virtual queue means that the system prepares all the resources that will be needed in order for the virtual queue to function as designed. Also, the queue module (30) is responsible for providing to the queue manager the registering information (302), necessary for a queue user to sign up to the queue, in the form of a http (https) web address.

In order for the queue manager to publish the queue registration information (302) he needs to publish the resource that the virtual queue is using to sign up new users to the queue. A few options are described in the previous paragraphs and the way of publishing the queue registration information is described above on the communication means (60).

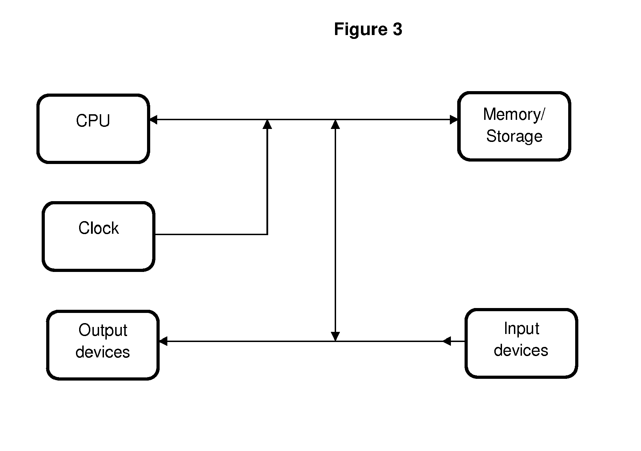

Figure 3 depicts a typical computer used as means (50) for running the computer executable instructions according to the present invention or as a user device (70) or as a communication means (60). Said computer must be able to communicate via a network or internet connection with the cloud application (100).

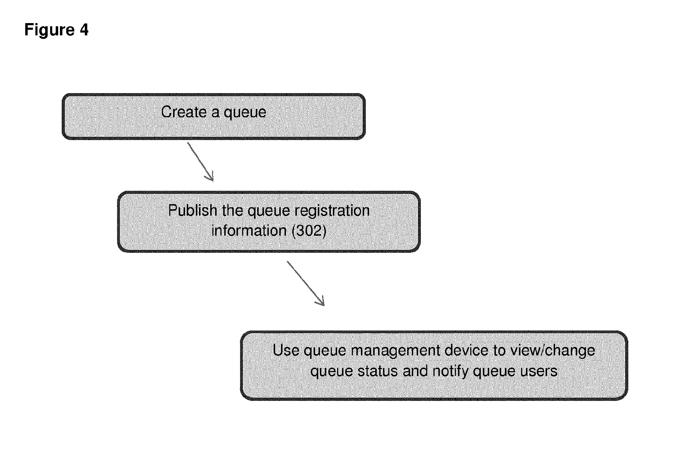

Fig 4 illustrates the activities performed by the queue manager in one embodiment of the invention, in order to set up one or more virtual queues: first, he needs to access the cloud application (100) using, for example, his personal computer and create an account into the cloud application (100), then he needs to login into the cloud application and has the possibility to create one or more virtual queues, depending on his wish, by using the corresponding web form. For example, a queue may be defined by the name (queue 1), the first number to be used by the first user (number 1) and the estimated time necessary for each user (for example 15min).

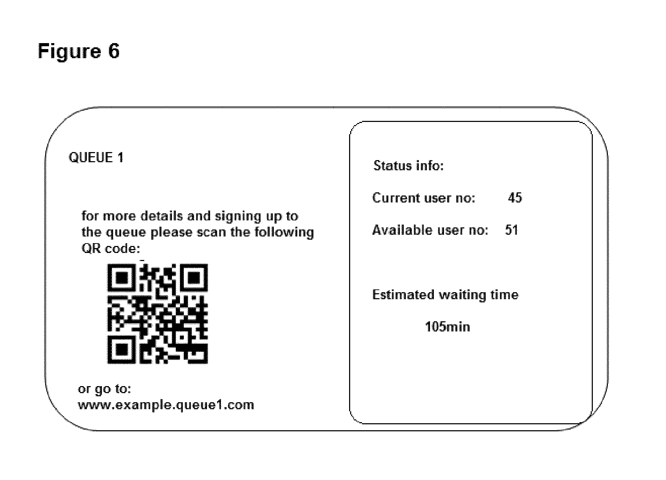

For each queue, the queue manager receives the queue registration information (302) from web reports in the form of a short url and then he communicates said information to the potential users, for example by posting a QR code on an electronic display or by providing printed sheets of paper comprising said information. One way of displaying said information is shown in figure 6.

Then, the queue manager can use his personal computer (via the manager's interface) to view and change the queue status and, if desired, to send notifications to the queue members. When one user has been served, the current user number changes. In this case, the queue manager must activate the new number of the new current user.

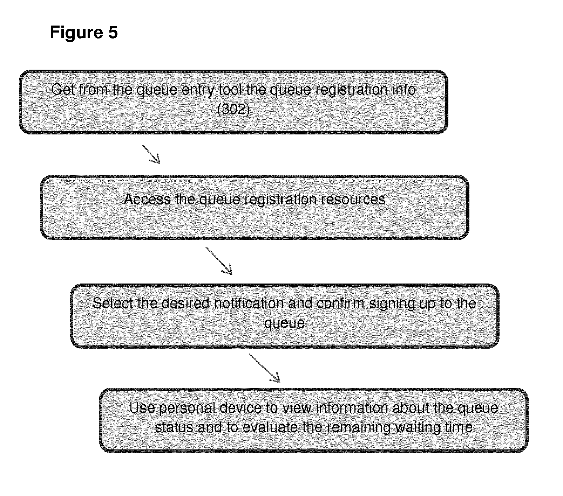

Fig 5 illustrates the activities performed by the queue users. When one person is interested in the goods or services provided by a queue manager, he can get the queue registration information (302) provided by the queue manager for the virtual queue of interest (for example queue 1). For example, he can get said information (302) by scanning the QR code published by the queue manager, by using his personal device (70), for example his smart phone. With said information (302) he can access the queue 1 registration resources any time he wants and from any place, with the aid of his personal device (70).

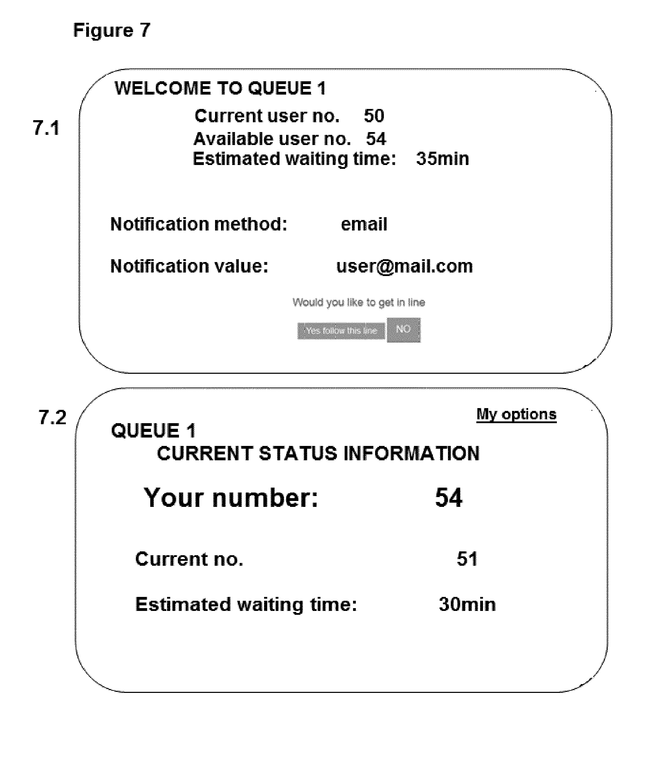

Any time he accesses said queue registration resources, he can view the updated status information for queue 1, as seen in figure 7.1, for example the name of the queue, the current user number, the available user number he could get if he decides to sign up to queue 1 and the estimated waiting time.

When he decides to sign up, he should provide the requested personal details, for example notification method (sms, email, etc), notification value (telephone number or email address, etc) by filling in a form. One embodiment of such a form is shown in figure 7.1. After confirming said personal details, he receives his user number (see for example figure 7.2).

In an embodiment of the invention, when a queue user requests an update about the queue status, the queue module (30) receives a request, packs the desired information into a form compatible with the requests and then sends the information back as a response to the request. The response information will normally contain data about the current active number, what is the queue member number of the person that requested the information and also what is the probable waiting time until that number will start to actively receive the services that the user has been waiting for.

### Information about the queue managed devices optionally used as communication means (60).

The queue managed devices are not mandatory but they help a lot to improve the professional look and feel of the queue management system. The queue managed device may be an electronic display on which updated information about the virtual queue may be displayed. The queue managed device can act as the queue entry tool (61) or as the queue status device (62).

As a queue entry tool (61), the device is responsible to provide to the future queue users the information (302) required to sign up to the virtual queue. If the queue members do not have a personal device (70) such as a smart phone, tablet, etc, then the queue entry tool is also responsible with allowing a user to sign up to the virtual queue.

As a queue status device (62), the device is responsible to display the current queue status. When the queue manager activates a new number then the notification module (40) will send the updated queue status also to the active queue status devices (62). Immediately upon receiving the notification that something has changed in the queue, the queue status device will display the updated queue status and optionally will play an audio sound. If desired the queue status devices can also be configured to access web media resources and display them as entertaining media in public locations.

### Queue management system benefits.

Because the queue is virtual, the queue users can benefit from a various list of tools that would be very difficult to implement otherwise.

Thus, the queue users can use their personal devices to sign up at any time into the queue and check at any time the current status of the virtual queues to which they are members or to which they would desire to become members.

Optionally, the queue users can anytime withdraw from the queue.

Also optionally, if the queue user estimates that it would be very unlikely that he would be present on the queue service area when his number becomes the current number, he can use his device (70) to request a queue number swap. When this happens, the queue notification module notifies the other queue users about a possible number swap. If one of them agrees, then the queue numbers are being swapped between the queue users.

### Actions required to create a queue according to one embodiment of the invention

1. The queue manager creates an account into the cloud application (100)
2. The queue manager creates a queue using a web form.
3. The queue manager gets the queue identification information from web reports and publishes it somewhere where it is easy for the future users to access it (in form of QR codes, NFC messages, short url, standard url etc.)

### Actions and the application's (100) responses in order for a user to become a queue user according to one embodiment of the invention

1. The person will have to scan QR code or access the NFC device or manually input into his mobile device the queue identification information
2. Use the User device (70) to access the queue registration information (302)
3. The cloud application (100) as a response performs all the following actions in the same time
   - notifies all the queue managed devices that a potential client has accessed the queue registration information (302)
   - Computes and sends to the user device (70) as a response the queue status (for example total members, probable waiting time and new user number) and a web form that will collect the user preferred notification form.
4. The user views the queue status details, fills in into the form the desired notification method and posts back to the cloud application (100) the form.
5. The application (100) as a response performs all the following actions:
   - Create the next number
   - Associate the user's preferred notification form with said number
   - Generate the user's management resources and associate them with said number
   - The following group of actions are performed in the same time
      ■ Notify all the queue managed devices (61,62) about the new queue member
      ■ Send a notification message to the new user using the user's provided notification method. The message will contain, for example, the following details:
         - Confirmation message and thank you
         - Assigned queue number
         - Probable waiting time
         - Current user number
         - Personalized link to the user's interface

### Manager interface

Using the queue manager's interface, a queue manager can view all the details about the queue status and can generate all the following events.
- Change the current active number
- Remove users from the queue
- Send custom notification message to all the users
- Send custom notification message to a specific user

### User's interface

Using the user's interface a queue user can view up to date specific details from the queue status that is relevant to him, can modify his preferences an can generate the following events
- Drop the queue
- Generate number change request (swap numbers)
- Accept number change request (swap numbers)

### Application (100) response to specific events

These are the application's (100) response to events, in one embodiment of the invention, that are not included in the queue creation and new user registration.
- Change the current active number.
   ■ the application (100) archives the old number
   ■ change the status of the next number to current number
   ■ notify all the queue managed devices (61,62) that the current number has been changed
   ■ generate the following messages and send them to the appropriate users
      - Thank you message for the last user that received the service
      - Personalized notification messages for the users that are expected to become active in a specific amount of time.
      - Special message for the current user notifying him that the time has arrived and it is time for him to start using the service.
- An user is removed from the queue
   ■ The application (100) archives the number
   ■ Notify all the queue managed devices that a number has been removed from the queue
   ■ Compute the active list of users that are affected by this event and send them personalized messages informing them about a favourable change in the probable wait time.
- Send custom notification message to a specific user
   ■ Identify the user and send him the custom notification message (this message is set by the queue manager)
- Send custom notification message to all the users
   ■ Compute all active users and send them the custom notification message. (this message is set by the queue manager)
- Number change request was generated (swap numbers)
   ■ Based on user's preferences, compute the list of users that are interested about the number change request
   ■ Generate a number change request
   ■ Associate to the change request the number that initiated the request and add this information to the user's interface
   ■ Associate the list of interested users to the request and generate refuse or acceptance interface for each user in particular.
   ■ Send notification message to the users that are interested to change their number
- Number change request was accepted
   ■ Associate the accepting user with the request as the number that accepted the request
   ■ Remove the request from the users' interface
   ■ Swap the number between the user that generated the request and the user that accepted the request
   ■ Notify all the queue managed devices about a successful number change request transaction.
   ■ Send notification messages only to the users that generated the request and the one that accepted the request informing them about the successful number swap.

## Claims

1. A system (1) for creating a virtual queue by a queue manager and for accessing said queue remotely by at least one user, comprising
a. computer executable instructions comprising
i. **a security module (10)** for validating the requests from the queue users or managers, by changing the validation state of the request from not defined into legal or illegal state,
ii. **an event registration module (20)** for processing said requests and sending them to the queue and notification module to be further processed,
iii. **a queue module (30)** for establishing and updating at least one virtual queue (301) and providing information (302) for registering into said queue via a network or internet connection (303), and for updating the queue status information (31) and
iv. **a notification module (40)** for sending notifications
b. means (50) for running said computer executable instructions and capable of having a network or internet connection
c. communicating means (60) for communicating to at least one user said information (302) for registering into a queue

2. The system according to claim 1 further comprising at least one user device (70) for inputting said queue registration information (302) and, based on said information (302), for accessing the virtual queue (301) via a network or internet connection (303).

3. The system according to claim 1 or 2, **wherein** after accessing said virtual queue (301) a user may view the virtual queue's status information (31) and/or may sign up into the virtual queue (301).

4. The system according to any of claims 2 to 3 **wherein** said device (70) is a mobile device such as a smart phone, a tablet or a laptop.

5. The system according to any of claims 1 to 4 **wherein** the queue registration information (302) is in the form of an http or https web address.

6. The system according to claim 5 **wherein** the http resource can automatically change after every access or only by request.

7. The system according to any of claims 1 to 6 **wherein** the queue registration information (302) is communicated by publishing it in the form of a QR code, short URL or standard URL.

8. The system according to any of claims 1 to 7 **wherein** the means (60) are, for example, a computer with a display, which allows the users of the system to view the queue registration information (302).

9. The system according to claim 8 **wherein** said computer with a display may be used also for signing up to a virtual queue (301).

10. The system according to any of claims 1 to 9 **wherein** the means (50) for running said computer executable instructions are either a computer, a personal computer or a laptop.

11. The system according to any of claims 1 to 10 **wherein** the queue status information (31) contain information regarding the current user number in the virtual queue, the user number in the queue and/or the number that may be allocated the a new user and the estimated time of waiting until its turn comes.

12. Method for creating and accessing a virtual queue remotely by at least one user, comprising the steps of:
a. establishing at least one virtual queue (301) and providing information (302) for registering into said queue via a network or internet connection (303)
b. communicating to at least one user said information (302) for registering into the queue (301)
c. inputting said queue registration information (302) into a device (70) and based on said information (302) accessing the virtual queue (301) via a network or internet connection (303)
d. view the virtual queue's status information (31), for example the current number in the virtual queue, the user's number in the queue and/or the number that may be allocated to a new user and the estimated time of waiting until its turn comes.

13. The method according to claim 12, further comprising the step e. signing up to the virtual queue of a new user and receiving a queue user number.

14. The method according to claim 13, **wherein** the users of the queue may swap the queue user numbers.

15. The method according to claims 13 or 14 **wherein** the queue user may chose a notifying method, such as email, sms, etc., to be notified about the queue status.
